# FASCICULE DE BREVET EUROPEEN

(11) **EP 1 809 543 B1**
(45) Date de publication et mention de la délivrance du brevet: **13.01.2016**
(21) Numéro de dépôt: 05807818.9
(22) Date de dépôt: 04.10.2005
(51) Int. Cl.: B65D 13/02, C03C 27/06

(54) **FLACON EN VERRE**
GLASFLASCHE
GLASS BOTTLE

(30) Priorité: 06.10.2004 FR 0452281
(43) Date de publication de la demande: 25.07.2007
(73) Titulaire: Shiseido International France, F-75008 Paris (FR)
(72) Inventeur: RONSIN, Hervé, F-56140 Malestroit (FR)
(74) Mandataire: CAPRI
(86) Numéro de dépôt international: PCT/FR2005/002439
(87) Numéro de publication internationale: WO 2006/037889

(56) Documents cités:
- WO-A-93/12049
- CH-A- 508 523
- DE-U1- 29 800 226
- FR-A- 877 132
- US-A- 1 647 175
- US-A- 2 749 668
- PATENT ABSTRACTS OF JAPAN vol. 2003, no. 12, 5 décembre 2003 (2003-12-05) & JP 2003 321028 A (SHIONTEKKU:KK), 11 novembre 2003 (2003-11-11)

## Description

La présente invention concerne un flacon en verre définissant un volume utile destiné à accueillir du produit fluide tel qu'une lotion, une crème ou un parfum. Le flacon peut être pourvu d'un organe de distribution, tel qu'un bouchon, une pompe ou une valve.

La cosmétique et la parfumerie sont des domaines d'application privilégiés mais non exclusifs, de la présente invention.

Dans l'art antérieur, l'assemblage d'au moins deux parties en verre donne lieu à un soudage verre sur verre. Un tel soudage nécessite alors un traitement thermique effectué à des températures supérieures à 800°C pour aboutir à la fusion du verre et à l'obtention d'une solidarisation permanente des parties en verre. Toutefois, un tel traitement thermique a des fâcheuses conséquences sur l'intégrité dimensionnelle de l'objet ainsi formé. En effet, un soudage à de telles températures a tendance à déformer le verre à proximité des zones de fusion. Ainsi, l'objet obtenu sera bien souvent pourvu de surfaces avoisinant les zones de fusion plus ou moins gondolées. Ces surfaces sont ainsi particulièrement inesthétiques. Ce problème touche particulièrement les objets de petite taille. En outre, de tels objets présentent généralement une faible épaisseur de paroi ce qui a tendance à favoriser cette irrémédiable déformation des parois de l'objet.

Or, dans le domaine du luxe, tel que le domaine de la cosmétique ou de la parfumerie, la qualité de fabrication et/ou de finition des flacons est primordiale pour l'utilisateur. En effet, de telles qualités, d'une part, constituent un gage de sérieux de la société qui commercialise ces produits (et renforce donc son prestige) et d'autre part, incite le client à tester, et éventuellement acheter ces produits. Les qualités esthétiques ou décoratives des flacons sont également de grande importance pour inciter un client à essayer le produit contenu dans ces flacons. Les sociétés du domaine du luxe rivalisent donc d'audace au niveau du choix des couleurs et de la forme des flacons. Toutefois, il est important d'élargir la palette de choix dont les industriels disposent pour se démarquer sans conteste des sociétés concurrentes de leur secteur. Pour ce faire, il est nécessaire de proposer des moyens de caractérisation des flacons innovants, garantissant une assimilation immédiate d'un flacon donnée à une société ou une marque donnée. Cependant, de tels moyens de caractérisation ne sont pas nécessairement aisément adaptables à tous types de flacons et notamment peuvent ne pas être adaptés à des flacons de petite taille ou alors des flacons réalisés en un matériau particulier.

Les documents FR 877 132 et US 1 647 175 divulguent des flacons pour parfum.

Un but de la présente invention est d'utiliser cette technique du soudage pour assembler les parties constitutives d'un flacon sans altérer l'intégrité du flacon et notamment en éliminant toutes possibilités de déformation du verre constitutif du flacon.

Un autre but de la présente invention est de réussir à assembler les parties constitutives d'un flacon de faible dimension par voie thermique sans altérer le flacon.

Un but de la présente invention est encore d'assembler de façon simple et rapide les parties constitutives d'un flacon.

Un autre but de la présente invention est encore de mettre au point des moyens de caractérisation de flacons adaptables à tous types de flacons, sans se soucier de leur configuration, de leur taille ou de leur matériau de réalisation.

Une technique alternative à celle du soudage est le collage. Cette technique séduisante, simple et peu coûteuse utilise des colles ou des résines contenant des substances qui peuvent malheureusement réagir ou se combiner avec le produit fluide du flacon. Ceci est notamment le cas avec les parfums dont la composition est très complexe et souvent gardée secrète. Les parfums contiennent de très nombreuses substances dont les réactions ou combinaisons avec la colle ou la résine sont imprévisibles, mais certaines. Dans les cas les moins dangereux, le parfum peut colorer de manière inesthétique la colle ou la résine. C'est pourquoi la technique de collage reste difficilement applicable au cas présent.

Ainsi, la présente invention a pour but de réaliser un assemblage de parties de flacon à l'aide d'une technique qui allie à la fois les avantages du soudage et ceux du collage. L'assemblage ne doit pas interagir avec le produit fluide contenu dans le flacon. Il ne doit pas non plus détériorer les parties du flacon à assembler.

Pour atteindre ces buts, la présente invention propose un flacon en verre selon la revendication 1 comprenant au moins deux parties en verre à assembler l'une avec l'autre, lesdites parties définissant ensemble un volume utile destiné à accueillir un produit fluide, tel qu'un parfum, ledit flacon définissant une ouverture caractérisé en ce que lesdites parties sont assemblées de manière étanche par soudage au moyen d'un matériau de soudure présentant une température de fusion inférieure à la température de fusion du verre, et en ce que le volume utile contient au moins un élément décoratif tridimensionnel. Ainsi, l'association de manière étanche des parties définissant le volume utile du flacon par l'utilisation d'un tel matériau de soudure évite toutes éventualités d'altération du flacon résultant du traitement thermique. En effet, selon l'invention, l'utilisation d'un matériau de soudure présentant un point de fusion plus bas que celui du verre permet de mettre uniquement en fusion le matériau de soudure pour l'assemblage des parties constitutives du flacon et évite ainsi de déformer le verre lui-même. L'élément décoratif placé à l'intérieur du flacon correspond donc à une forme, un volume, ou plus généralement à un objet ou tridimensionnel creux ou plein quelconque. La présence d'un tel élément en contact du produit fluide diminue ainsi le volume utile du flacon mais garantit un effet esthétique particulièrement intéressant. Une telle méthode d'assemblage permet de placer, avant assemblage d'une partie constitutive du flacon sur l'autre, un ou plusieurs éléments décoratifs tridimensionnels de taille supérieure au diamètre de l'orifice de distribution dans le « futur volume utile du flacon » ce qui résulte en un effet esthétique tout à fait étonnant.

Avantageusement, ledit matériau de soudure présente une température de fusion de l'ordre de 350 à 600°C.

Avantageusement, ledit matériau de soudure comporte de l'émail. L'émail est connu pour être particulièrement inerte, même avec le parfum.

Avantageusement, lesdites parties comprennent un corps, définissant éventuellement l'ouverture, et un fond destiné à être soudé de manière étanche sur le corps. Ainsi, l'ouverture sert par exemple au montage d'un organe de distribution, telle qu'une pompe ou une valve, ou bien simplement peut servir d'orifice de distribution en tant que tel et être obturé par un bouchon. Selon l'invention l'élément décoratif forme l'ouverture du flacon.

Avantageusement, ledit élément décoratif a une dimension supérieure ou égale au diamètre de l'ouverture du flacon.

Avantageusement, ledit élément décoratif est en verre.

Avantageusement, ledit élément décoratif est fixé à ou sur au moins une desdites parties.

Avantageusement, l'élément décoratif est fixé par soudage au moyen d'un matériau de soudure, tel que de l'émail, présentant une température de fusion inférieure à la température de fusion du verre. Un tel soudage permet ainsi d'éviter toutes déformations des parties constitutives du flacon ainsi que de l'élément décoratif. De plus, le soudage est particulièrement apprécié du fait qu'il garantit une solidarisation permanente de l'élément décoratif au flacon et ne risque pas d'entraîner des problèmes d'incompatibilités chimiques avec le produit fluide contenu dans le flacon comme ça pourrait être le cas en utilisant un adhésif telle qu'une colle.

Il est également divulgué un procédé de fabrication d'un flacon en verre comprenant au moins deux parties en verre à assembler l'une avec l'autre, lesdites parties définissant ensemble un volume utile destiné à accueillir un produit fluide, ledit procédé comprenant les étapes de :
- fixer un élément décoratif tridimensionnel sur une des parties,
- déposer un matériau de soudure présentant une température de fusion inférieure à la température de fusion du verre sur au moins l'une des parties,
- associer lesdites parties ensemble au niveau du dépôt de matériau de soudure de manière à constituer ledit flacon en verre,
- faire subir un traitement thermique au matériau de soudure à une température inférieure à la température de fusion du verre pour faire fondre le matériau de soudure et ainsi solidariser lesdites parties ensemble.

Avantageusement, l'élément décoratif tridimensionnel à fixer sur une des parties est en verre et est fixé par soudage au moyen d'un matériau de soudure, tel que de l'émail, présentant une température de fusion inférieure à la température de fusion du verre.

D'autres caractéristiques et avantages de la présente invention apparaîtront plus clairement à la lecture de la description détaillée suivante faite en référence aux dessins joints donnés à titre d'exemples non limitatifs et sur lesquels :
- la figure 1 est une vue schématique en section transversale d'un flacon à l'état non assemblé selon un premier mode de réalisation, le flacon étant pourvu d'un élément décoratif tridimensionnel ;
- la figure 2 est une vue schématique en section transversale d'un flacon à l'état non assemblé identique à celui représenté sur la figure 1, pourvu d'un autre élément décoratif tridimensionnel selon l'invention ;
- la figure 3 est une vue schématique en section transversale d'un flacon à l'état non assemblé selon un deuxième mode de réalisation qui ne fait pas partie de l'invention, pourvu de plusieurs éléments décoratifs tridimensionnels.

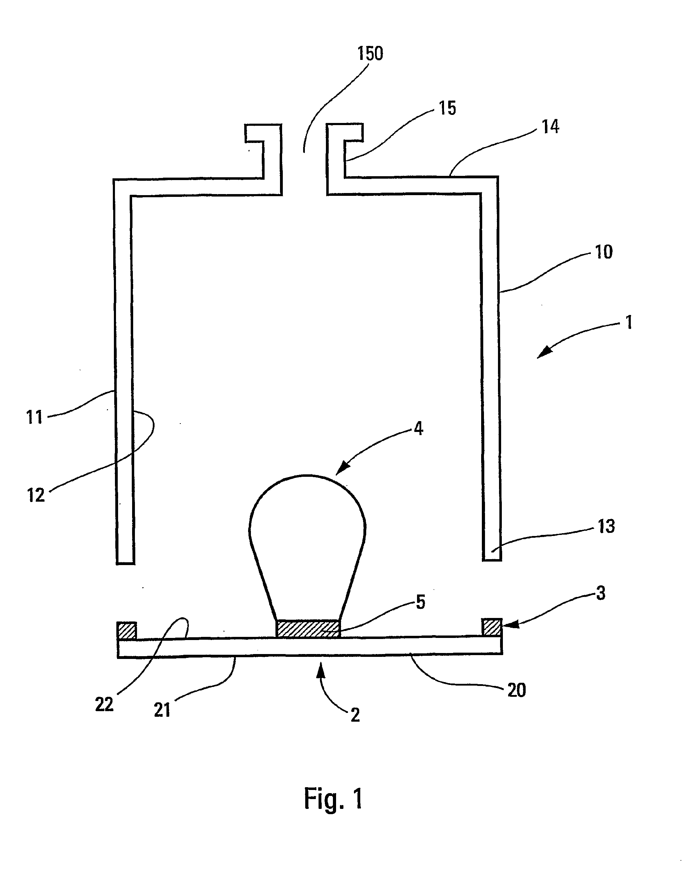

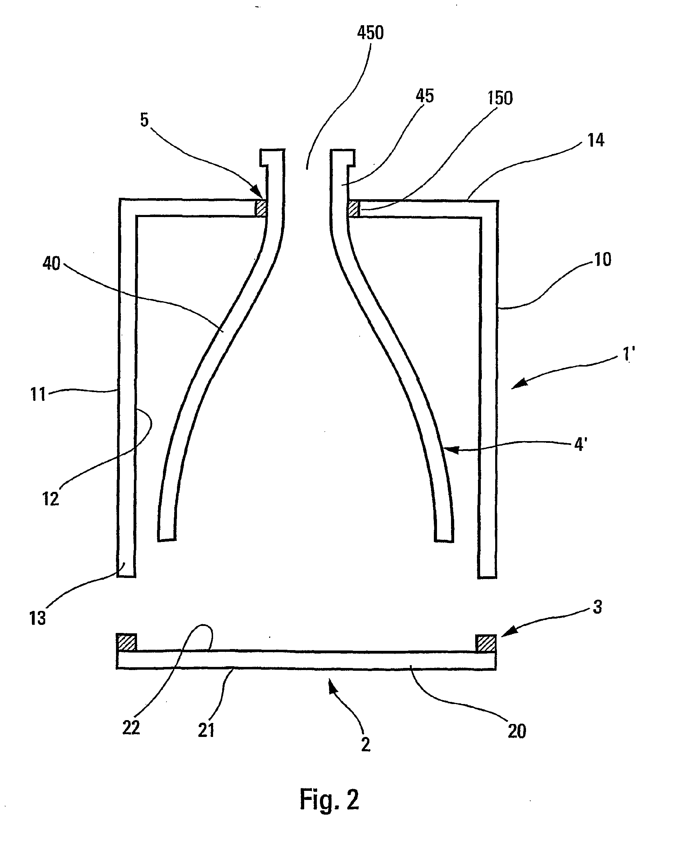

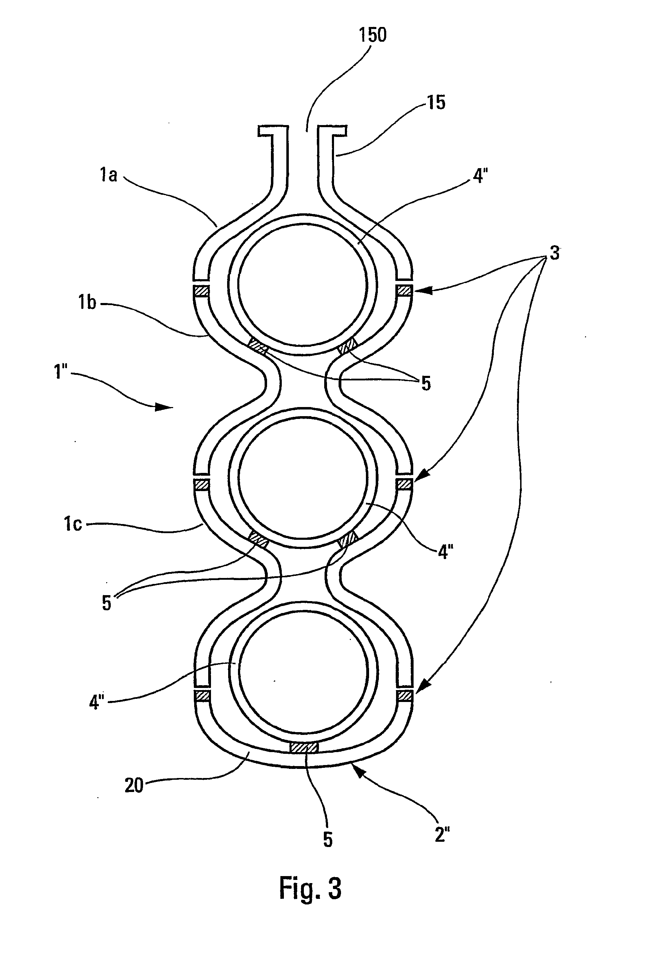

Il est divulgué un flacon en verre subdivisé en plusieurs parties constitutives, par exemple au nombre de deux selon le mode de réalisation de la figure 1, au nombre de trois selon le mode de réalisation de la figure 2 et au nombre de quatre selon le mode de réalisation de la figure 3. Les figures 1, 2 et 3 représentent ainsi le flacon à l'état non assemblé. Le flacon est ainsi scindé en un nombre quelconque de partie et peut, à l'état assemblé, présenter toutes formes appropriés ainsi que toutes dimensions appropriées. Par exemple, le flacon peut présenter une forme cylindrique, parallélépipédique, cubique, sphérique ou autre.

La figure 1 représente un flacon en verre formé de deux parties constitutives, à savoir un corps 1 et un fond 2.

Le corps 1 selon cet exemple de réalisation qui ne fait pas partie de l'invention comporte un fût sensiblement cylindrique 10 se terminant par une extrémité inférieure ouverte et une extrémité supérieure. L'extrémité inférieure définit un bord ouvert 13 destiné à être obturé par le fond 2 comme il sera ultérieurement expliqué. Le bord ouvert donne un large accès à l'intérieur du corps.

L'extrémité supérieure définit un épaulement 14 qui referme partiellement le fût 10, ainsi qu'un col 15 définissant une ouverture 150. Cette ouverture est destinée à servir au remplissage du flacon en verre par du produit, de préférence fluide (liquide ou pulvérulent), une fois les parties constitutives du flacon assemblées. Cette ouverture va aussi servir à la distribution de produit soit par inclinaison du flacon soit au moyen d'un organe de distribution. Le procédé d'assemblage des parties 1 et 2 du flacon sera expliqué ci-après.

Le col 15 peut ainsi servir à la fixation d'un organe de distribution telle qu'une pompe ou une valve. L'organe de distribution est alors introduit dans l'ouverture 150 du col et est avantageusement fixée à l'aide d'une bague à visser, à encliqueter ou à sertir sur le col du corps 1 (non représenté).Un simple bouchon à emmancher ou à visser peut aussi être utilisé pour obturer cette ouverture 150.

Le corps 1 définit une surface externe 11 et une surface interne 12. Ces surfaces s'étendent de l'extrémité inférieure jusqu'au col 15 de l'extrémité supérieure en passant par le fût cylindrique 10.

Le fond 2 selon cet exemple de réalisation présente la forme d'un plateau 20 définissant une surface externe 21 et une surface interne 22. Un tel plateau peut présenter toutes configurations appropriées, par exemple circulaire, rectangulaire, carrée ou autres, selon la forme du corps à associer. Ce plateau peut être comme dans le mode de réalisation des figures 1 et 2 une surface parfaitement plane. Toutefois, ce plateau dans un autre mode de réalisation pourrait très bien être bordé par une jupe périphérique verticale destinée à être placé dans le prolongement des surfaces externe 11 et interne 12 du corps 1.

Le corps 1 et le fond 2 sont destinés à être assemblés l'un avec l'autre. Selon l'invention, un matériau de soudure 3 présentant une température de fusion inférieure à celle du verre est mis à oeuvre pour réaliser cette fixation, de préférence étanche, du corps 1 sur le fond 2. Un tel matériau peut être déposé par toutes techniques appropriées, telle que par sérigraphie, sur l'une des parties constitutives du flacon. Par exemple, le matériau de soudure 3 peut être déposé sur le fond 2 comme dans l'exemple représenté sur la figure 1. Avantageusement, le matériau de soudure 3 présente une température de fusion approximativement comprise entre 350 et 600°C. Cette gamme de température permet ainsi de bannir toute éventualité de distorsion ou de gondolage du flacon en verre par la définition d'une marge différentielle minimale confortable, d'environ 200°C, entre la température de fusion du verre et la température de fusion du matériau de soudure mis en oeuvre. Ce matériau de soudure 3 comporte de préférence de l'émail. Cet émail peut être sous forme pure ou bien être intégré dans un mélange composite. Afin de procéder à la fixation définitive du corps 1 sur le fond 2, le corps 1 et le fond 2 sont associés l'un avec l'autre puis subissent un traitement thermique permettant de fermement solidariser le corps et le fond ensemble. Ce traitement thermique, mis en oeuvre à une température de fusion inférieure à celle du verre, c'est-à-dire inférieure à 800°C, a alors pour effet de faire fondre la matériau de soudure sans déformation du verre qui constitue le corps et le fond. Une liaison solide et définitive du corps 1 et du fond 2 peut être ainsi obtenue sans conséquences sur la physionomie des parties constitutives du flacon.

Ce soudage donne alors lieu à la création d'un flacon en verre dont la surface interne 12 du corps et la surface interne 22 du fond délimite ensemble le volume utile du flacon 1, c'est-à-dire le volume susceptible d'être occupé par le produit fluide au sein du flacon. Les surfaces internes du corps et du fond définissent ainsi ensemble la surface interne du flacon destinée à être en contact avec le produit alors que les surfaces externes du corps et du flacon définissent ensemble la surface externe du flacon généralement destinée à la préhension du flacon.

Par ailleurs, un élément décoratif tridimensionnel 4 est avantageusement prévu. Cet élément décoratif peut présenter toutes formes appropriées et est de préférence fixé sur une surface interne du flacon. Cette fixation peut se faire par tous moyens appropriés mais est réalisé de préférence au moyen d'un matériau de soudure 5 présentant avantageusement une température de fusion inférieure à celle du verre. Le matériau de soudure 5 utilisé peut être identique au matériau de soudure 3 mis en oeuvre pour la solidarisation des parties constitutives du flacon ou alors différent de ce matériau 3. Le matériau de soudure 5 est avantageusement de l'émail. Cette opération de fixation se fait de préférence préalablement à la constitution du flacon en verre. Il est à noter que le fait de scinder un flacon en diverses parties constitutives a pour avantage de pouvoir fixer sur la surface interne du flacon un ou plusieurs élément(s) décoratif(s) de taille et de forme diverses de manière aisée. En particulier, ces éléments décoratifs pourront présenter une dimension supérieure ou égale au diamètre du col du flacon. De tels éléments décoratifs comparables à une « forme dans la forme » conféreront alors au flacon un effet esthétique indéniable particulièrement recherché dans le domaine de la parfumerie-cosmétique.

Dans le premier mode de réalisation représenté sur la figure 1, l'élément décoratif 4 présente la forme d'un bulbe. Ce bulbe est fixé, de préférence par soudage, sur la surface interne 22 de la paroi 20 du fond du flacon avant de procéder à l'assemblage du corps 1 et du fond 2.

Dans le mode de réalisation selon l'invention représenté sur la figure 2, le flacon comprend trois parties de verre à assembler les unes aux autres pour constituer un flacon de verre. La partie 1' peut être identique à celle de la figure 1 excepté au niveau du col. En effet, la partie 1' forme un corps de flacon comprenant un fût 10 ayant un bord inférieur ouvert 13 donnant largement accès à l'intérieur du corps. A son extrémité supérieure, le corps forme un épaulement 14 définissant un trou de passage central 150. Par conséquent, le corps 1 est dépourvu de col, contrairement au mode de réalisation de la figure 1.

D'autre part, la seconde partie est formée par un fond 2 qui peut être strictement identique à celui du mode de réalisation de la figure 1. Toutefois, le fond 2 de la figure 2 n'est pas pourvu d'un élément décoratif, contrairement au mode de réalisation de la figure 1.

Dans ce second mode de réalisation, le flacon comprend également un élément décoratif 4' qui s'étend à l'intérieur du corps 1', par exemple sous la forme de pattes esthétiques 40 ou tout autre forme n'altérant pas la fonction de volume utile du réservoir. L'élément décoratif 4' forme en outre un col 45 définissant une ouverture 450. Ce col 45 est destiné à être logé dans le trou de passage 150 formé par l'épaulement 14 du corps 1'.

Selon l'invention, l'élément décoratif 4' est fixé au corps 1' par soudure à l'aide d'un matériau de soudure 5 qui relie de manière étanche le bord du trou de passage 150 à la paroi externe du col 45, comme on peut le voir sur la figure 2. Ce matériau de soudure 5 peut être de même nature que le matériau de soudure 3 qui est utilisé pour relier le fond 2 au corps 1'. Dans ce second mode de réalisation, le matériau de soudure 3 et 5 peut être de même nature que celui utilisé dans le premier mode de réalisation, en l'occurrence de l'émail ou un matériau contenant de l'émail.

Pour constituer le flacon de la figure 2, il est d'abord nécessaire de fixer l'élément décoratif 4' à l'intérieur du corps 1', puis seulement de fixer le fond 2 sur le corps 1'. En effet, il n'est pas possible d'introduire l'élément décoratif 4' par le trou de passage 150 étant donné que les pattes esthétiques 40 présentent un diamètre supérieur à celui du tour de passage 150.

Il aurait également été possible, selon une variante de réalisation, de réaliser de manière monobloc le fût 10 avec le fond 2, et de réaliser d'autre part l'élément esthétique 4' avec l'épaulement 14. De cette manière, la soudure serait réalisée au niveau de la jonction du bord périphérique externe de l'épaulement 14 avec le bord supérieur du fût 10.

La figure 3 représente un autre exemple de réalisation d'un flacon en verre qui ne fait pas partie de l'invention. A la différence du premier mode de réalisation, le flacon selon cet exemple est constitué de quatre parties, initialement séparées, à assembler. Ces parties consistent dans cet exemple en une partie supérieure la, une partie intermédiaire 1b, une partie intermédiaire sous-jacente le et un fond 2". La partie supérieure, la partie intermédiaire et la partie intermédiaire sous-jacente forment ensemble le corps 1' du flacon à assembler de manière étanche sur le fond 2".

La partie supérieure la comporte un col 15 définissant une ouverture 150'.

La partie intermédiaire 1b et la partie intermédiaire sous-jacente 1c présente selon ce mode de réalisation particulier une configuration globale sensiblement identique avec une paroi sensiblement étranglé en son milieu.

Le fond 2" comprend quant à lui une paroi 20 présentant une forme légèrement incurvée sur ces bords et sensiblement plane dans sa partie médiane.

Comme dans le premier mode de réalisation du flacon en verre, chaque partie définit une surface interne destinée à être en contact du produit fluide et une surface externe servant généralement à la préhension du flacon.

La formation du flacon par solidarisation, de préférence étanche et définitive, des quatre parties 1a, 1b, 1c, 2" se fait de manière identique à ce qui a été décrit pour le flacon des figures 1 et 2. Ainsi, afin de fixer les parties constitutives du flacon, un matériau de soudure 3 présentant une température de fusion inférieure à celle du verre, tel que de l'émail est appliqué sur les parties à assembler tels que par exemple sur les extrémités supérieures libres de la partie intermédiaire 1b, de la partie intermédiaire sous-jacente 1c et du fond 2". Les différentes parties du flacon sont alors assemblées puis le matériau de soudure 3 est chauffé à une température inférieure à la température de fusion du verre de manière à faire fondre uniquement le matériau de soudure et à entraîner la solidarisation des différentes parties constitutives du flacon sans occasionner de déformations au niveau du flacon formé.

Selon le troisième mode de réalisation, trois éléments décoratifs 4", de forme globale ovoïdale ou sphérique, sont prévus. Ces éléments, tels que représentés, peuvent être chacun fixés au niveau des surface internes d'une des parties constitutives du flacon. Les trois éléments décoratifs 4" peuvent être respectivement fixés aux parties 1b, 1c et 2". Les soudures 5 sur les parties 1b, et le peuvent se présenter sous la forme de points de soudures discrets pour permettre un passage de produit fluide.

Il est à noter que les éléments décoratifs peuvent également ne pas être fixés au niveau de la surface interne du flacon. Ils peuvent simplement être coincés ou librement déplaçables dans le volume utile du flacon assemblé.

D'autre part, il est à noter que bien que les modes de réalisation décrits ne prévoit que le cas de flacons scindés horizontalement en plusieurs parties, il est bien entendu possible d'envisage de scinder le flacon selon un ou plusieurs plan(s) transversal(aux) ou vertical(aux) passant ou non à travers le col du flacon.

Bien que la présente invention ait été décrite en référence à des modes de réalisation particuliers de celle-ci, il est entendu qu'un homme du métier peut y apporter toutes modifications, sans sortir du cadre de la présente invention tel que défini par les revendications annexées.

## Revendications

1. Flacon en verre comprenant au moins deux parties en verre (1', 2) à assembler l'une avec l'autre, lesdites parties définissant ensemble un volume utile destiné à accueillir un produit fluide, tel qu'un parfum, ledit flacon définissant une ouverture (450), lesdites parties étant assemblées de manière étanche par soudage au moyen d'un matériau de soudure (3) présentant une température de fusion inférieure à la température de fusion du verre, **caractérisé en ce que** le volume utile contient au moins un élément décoratif tridimensionnel (4'), et
**en ce que** l'élément décoratif (4') forme l'ouverture (450)

2. Flacon en verre selon la revendication 1, dans lequel ledit matériau de soudure (3) présente une température de fusion de l'ordre de 350 à 600°C.

3. Flacon en verre selon la revendication 1 ou 2, dans lequel ledit matériau de soudure (3) comporte de l'émail.

4. Flacon en verre selon la revendication 1, 2 ou 3, dans lequel lesdites parties (1', 2) comprennent un corps (1') et un fond (2) destiné à être soudé de manière étanche sur le corps.

5. Flacon en verre selon l'une quelconque des revendications précédentes, dans lequel ledit élément décoratif (4') a une dimension supérieure ou égale au diamètre de l'ouverture (450) du flacon.

6. Flacon en verre selon l'une quelconque des revendications précédentes, dans lequel ledit élément décoratif (4') est en verre.

7. Flacon en verre selon l'une quelconque des revendications précédentes, dans lequel ledit élément décoratif (4') est fixé à au moins une desdites parties.

8. Flacon en verre selon la revendication 7, dans lequel l'élément décoratif (4') est fixé par soudage au moyen d'un matériau de soudure (5), tel que de l'émail, présentant une température de fusion inférieure à la température de fusion du verre.

## Patentansprüche

1. Glasflasche mit zumindest zwei zusammenzufügenden Teilen aus Glas (1', 2), wobei die Teile gemeinsam einen Nutzraum definieren, der dazu bestimmt ist, ein flüssiges Produkt, wie etwa ein Parfüm, aufzunehmen, wobei die Flasche eine Öffnung (450) definiert, wobei die Teile durch Verschweißen mittels eines Schweißmaterials (3), das eine Schmelztemperatur aufweist, die geringer als die Schmelztemperatur von Glas ist, in dichter Weise zusammengefügt sind, **dadurch gekennzeichnet, dass** der Nutzraum zumindest ein dreidimensionales dekoratives Element (4') beinhaltet und dass das dekorative Element (4') die Öffnung (450) bildet.

2. Glasflasche nach Anspruch 1, wobei das Schweißmaterial (3) eine Schmelztemperatur in der Größenordnung von 350 bis 600 °C aufweist.

3. Glasflasche nach Anspruch 1 oder 2, wobei das Schweißmaterial (3) Emaille aufweist.

4. Glasflasche nach Anspruch 1, 2 oder 3, wobei die Teile (1', 2) einen Körper (1') und einen Boden (2) enthalten, der dazu bestimmt ist, in dichtender Weise an den Körper angeschweißt zu werden.

5. Glasflasche nach einem der vorangehenden Ansprüche, wobei das dekorative Element (4') eine Abmessung besitzt, die größer oder gleich dem Durchmesser der Öffnung (450) der Flasche ist.

6. Glasflasche nach einem der vorangehenden Ansprüche, wobei das dekorative Element (4') aus Glas ist.

7. Glasflasche nach einem der vorangehenden Ansprüche, wobei das dekorative Element (4') an zumindest eines der Teile befestigt ist.

8. Glasflasche nach Anspruch 7, wobei das dekorative Element (4') durch Verschweißen mittels eines Schweißmaterials (5), wie etwa Emaille, befestigt ist, das eine Schmelztemperatur aufweist, die geringer als die Schmelztemperatur von Glas ist.

## Claims

1. A glass flask comprising at least two glass portions (1', 2) to be assembled with each other, said portions defining together a usable volume intended for receiving a fluid product, such as a perfume, said flask defining an aperture (450), said portions being sealably assembled by welding by means of a welding material (3) having a melting temperature below the melting temperature of the glass, **characterized in that** the usable volume contains at least one three-dimensional decorative element (4'), and
**in that** the decorative element (4') forms the aperture (450).

2. The glass flask according to claim 1, wherein said welding material (3) has a melting temperature of the order of 350 to 600°C.

3. The glass flask according to claim 1 or 2, wherein said welding material (3) comprises enamel.

4. The glass flask according to claim 1, 2 or 3, wherein said portions (1', 2) comprise a body (1') and a bottom (2) intended to be sealably welded onto the body.

5. The glass flask according to any one of the preceding claims, wherein said decorative element (4') has a dimension greater than or equal to the diameter of the aperture (450) of the flask.

6. The glass flask according to any one of the preceding claims, wherein said decorative element (4') is in glass.

7. The glass flask according to any one of the preceding claims, wherein said decorative element (4') is attached to at least one of said portions.

8. The glass flask according to claim 7, wherein the decorative element (4') is attached by welding by means of a welding material (5), such as enamel, having a melting temperature below the melting temperature of glass.
